# EUROPEAN PATENT APPLICATION

(11) **EP 4 693 541 A1**
(43) Date of publication of application: **11.02.2026**
(21) Application number: 24777698.2
(22) Date of filing: 12.03.2024
(51) Int. Cl.: H01M 10/04, H01M 10/0583

(54) **MATERIAL STRIP TENSION ADJUSTING MECHANISM AND STACKING MACHINE**

(30) Priority: 27.03.2023 CN 202320629019 U
(71) Applicant: Wuxi Lead Intelligent Equipment Co., Ltd., Wuxi, Jiangsu 214028 (CN)
(72) Inventor: XU, Jiakai, Wuxi, Jiangsu 214028 (CN); LEI, Zhanfang, Wuxi, Jiangsu 214028 (CN)
(74) Representative: Rau, Schneck & Hübner Patentanwälte Rechtsanwälte PartGmbB
(86) International application number: PCT/CN2024/081087
(87) International publication number: WO 2024/198908

(57) **Abstract**

The present disclosure relates to a material strip tension adjusting mechanism and a stacking machine. The material strip tension adjusting mechanism includes: a moving mechanism (1); a bracket (2) including a fixed bracket (21) and a movable bracket (22), the fixed bracket (21) being provided on the moving mechanism (1); an elastic member (3), a first end of the elastic member (3) being connected to the fixed bracket (21), and a second end of the elastic member (3) being connected to the movable bracket (22); a first clamping assembly (4) including a first clamping member (41); and a second clamping assembly (5), which is provided on the movable bracket (22).

## Description

### TECHNICAL FIELD

The present disclosure relates to the technical field of cell processing equipment, and particularly to a material strip tension adjusting mechanism and a stacking machine.

### BACKGROUND

Lithium-ion power batteries are mainly used for the energy supply of new energy vehicles and are the core components of new energy vehicles. Lithium-ion power batteries can have both coiled and laminated structures. Specifically, when manufacturing a lithium-ion power battery with a laminated structure, a stacking machine is usually used to complete the manufacture.

When the stacking machine manufactures the lithium-ion power battery in the laminated structure, to the end of the winding stage, the separator needs winding in the winding position to the cell. In order to enable the separator to be tightly wound on the cell without being pulled off during the winding process, it is necessary to adjust the tension level of the separator between the material strip tension adjusting mechanism and the winding position by means of the material strip tension adjusting mechanism.

In related technologies, the material strip tension adjusting mechanism typically includes a first clamping member, a second clamping member, and a bracket. The first clamping member and the second clamping member are slidably provided on the bracket, capable of moving towards or away from the winding position via their respective sliding rail assemblies. When the separator is clamped between the first and second clamping members, the pulling force of the separator causes both the first and second clamping members to slide along their corresponding sliding rail assemblies towards the winding position to adjust the tension level of the separator. However, due to the difficulty in ensuring assembling and machining accuracy of the two sliding rail assemblies, the problem that the first and second clamping members are not synchronized when sliding towards the winding position along the corresponding sliding rail assemblies often occurs. In other words, the first and second clamping members have poor synchronization when they slide towards the winding position along the corresponding sliding rail assemblies.

### SUMMARY

The present disclosure discloses a material strip tension adjusting mechanism and a stacking machine, which can achieve better synchronization when the first clamping member and the second clamping member are moved towards or away from the winding position along the first direction.

To achieve the above objective, in a first aspect, the present disclosure discloses a material strip tension adjusting mechanism, which includes:
a moving mechanism;
a bracket, including a fixed bracket and a movable bracket, the fixed bracket being provided on the moving mechanism, the moving mechanism being configured to drive the fixed bracket to reciprocate along a first direction, and the movable bracket being slidably provided on the fixed bracket along the first direction;
an elastic member, a first end of the elastic member being connected to the fixed bracket, and a second end of the elastic member being connected to the movable bracket;
a first clamping assembly, provided on the movable bracket, including a first clamping member;
a second clamping assembly, provided on the movable bracket, including a second clamping member opposed to the first clamping member, at least one of the first clamping member and the second clamping member being slidable towards or away from the other along a second direction, so as to clamp or release the material strip between the first clamping member and the second clamping member, the second direction being perpendicular to the first direction.

Since the first clamping assembly and the second clamping assembly are both provided on the movable bracket, and the movable bracket is slidably provided on the fixed bracket along the first direction, therefore, by making the movable bracket slide reciprocally along the first direction relative to the fixed bracket, the objective of bringing the first clamping member and the second clamping member to move synchronously towards or away from the winding position along the first direction can be realized. This ensures better synchronization when the first clamping member and the second clamping member are moved towards or away from the winding position along the first direction. In this way, it is possible to avoid the problem of poor synchronization when the first clamping member and the second clamping member are moved towards or away from the winding position along the first direction, so that the material strip tension adjusting mechanism can adjust the tension of the material strip more stably.

Optionally, the movable bracket includes a bracket body and a first guidepost, both the first clamping assembly and the second clamping assembly are provided on the bracket body, the first guidepost is provided on the bracket body, the fixed bracket is provided with a first guide hole, and the first guidepost slidably passes through the first guide hole along the first direction, so that the movable bracket is slidably provided on the fixed bracket along the first direction.

By enabling the first guidepost to slidably pass through the first guide hole along the first direction, the objective of enabling the movable bracket to be slidably provided on the fixed bracket along the first direction can be realized, and the implementation is very simple. Therefore, it is possible to reduce the manufacturing cost of the material strip tension adjusting mechanism to some extent.

Optionally, the first guidepost includes a post body and a blocking part 2222, the post body slidably passes through the first guide hole along the first direction, a first end of the post body is connected to the bracket body, a second end of the post body protrudes out of the first guide hole, the blocking part 2222 is provided on the second end of the post body, and the blocking part 2222 is configured to prevent the second end of the post body from sliding into the first guide hole.

Optionally, the elastic member is clamped between the blocking part 2222 and the fixed bracket, the first end of the elastic member abuts against the fixed bracket, and the second end of the elastic member abuts against the blocking part 2222.

Optionally, the elastic member is a spring which is sleeved on the post body.

By enabling the spring to be sleeved on the post body, the post body can function to guide the spring, thereby preventing the spring from tilting.

Optionally, the movable bracket further includes:
one or more second guideposts, wherein each of the second guideposts is provided on the bracket body, the fixed bracket is provided with a second guide hole corresponding one-to-one with the one or more second guideposts, the second guide hole is provided with a bushing therein, and the second guidepost slidably passes through a corresponding bushing along the first direction.

By enabling the second guidepost to slidably pass through a corresponding bushing along the first direction, under the cooperation of the second guidepost and the bushing, the movable bracket can slide more stably relative to the fixed bracket along the first direction.

Optionally:
the first clamping assembly further includes: a first driving member, configured to drive the first clamping member to slide towards or away from the second clamping member along the second direction;
   and/or,
the second clamping assembly further includes a second driving member, configured to drive the second clamping member to slide towards or away from the first clamping member along the second direction.

When the first clamping assembly further includes a first driving member, by driving the first clamping member via the first driving member to slide towards or away from the second clamping member along the second direction, it is possible to move the second clamping member and the first clamping member towards or away from each other, so that the material strip can be better clamped between the second clamping member and the first clamping member.

Optionally, the material strip tension adjusting mechanism further includes:
a sliding rail assembly, via which both the first clamping member and the second clamping member are slidably provided on the movable bracket along the second direction.

By enabling both the first clamping member and the second clamping member to be slidably provided on the movable bracket via the sliding rail assembly along the second direction, the sliding rail assembly may function to guide the first clamping member and the second clamping member. In this way, it is possible for the first clamping member and the second clamping member to move more stably along the second direction.

Optionally, the first clamping assembly further includes a first adaptor, the second clamping assembly further includes a second adaptor, both the first adaptor and the second adaptor are provided on the sliding rail assembly, the first clamping member is connected to the first adaptor, the second clamping member is connected to the second adaptor, the first driving member is connected to the first adaptor for driving the first adaptor to slide along the second direction, and the second driving member is connected to the second adaptor for driving the second adaptor to slide along the second direction.

By providing the first adaptor, it is possible to avoid the situation in which the first driving member is directly connected to the first clamping member, and thus to simplify the structure of the first clamping member. Similarly, by providing the second adaptor, it is possible to avoid the situation in which the second driving member is directly connected to the second clamping member, and thus to simplify the structure of the second clamping member.

Optionally, the first adaptor is provided with a first limit member, the second adaptor is provided with a second limit member, the first limit member and the second limit member are arranged opposite to each other along the second direction, the movable bracket is provided with a stop member located between the first limit member and the second limit member, and when the first adaptor slides along the second direction such that the first limit member abuts against the stop member, and the second adaptor slides along the second direction such that the second limit member abuts against the stop member, the first clamping member and the second clamping member abut against each other.

By enabling the first adaptor to slide along the second direction such that the first limit member abuts against the stop member and enabling the second adaptor to slide along the second direction such that the second limit member abuts against the stop member, the first clamping member and the second clamping member abut against each other, and the stop member functions as a limiter, preventing damage to the material strip clamped between the first clamping member and the second clamping member due to excessive clamping force between the two clamping members.

Optionally, the first clamping member and/or the second clamping member is provided with an adsorption hole.

By providing the adsorption hole on the first clamping member and/or the second clamping member, it is also possible to adsorb and fix the material strip through the adsorption hole, and thus to prevent the material strip from wobbling.

In a second aspect, the present disclosure discloses a stacking machine, which includes the material strip tension adjusting mechanism according to any one of the above first aspect.

Since the material strip tension adjusting mechanism can prevent poor synchronization when the first clamping member and the second clamping member are moved towards or away from the winding position along the first direction, it provides more stable adjustment of the tension of the material strip. Consequently, when the stacking machine includes the material strip tension adjusting mechanism, the performance of the stacking machine can be improved.

Compared with the prior art, the present disclosure offers the following advantages:
Since the first clamping assembly and the second clamping assembly are both provided on the movable bracket, the movable bracket is slidably provided on the fixed bracket along the first direction. Therefore, by making the movable bracket slide reciprocally along the first direction relative to the fixed bracket, the objective of bringing the first clamping member and the second clamping member to move synchronously towards or away from the winding position along the first direction can be realized. This ensures better synchronization when the first clamping member and the second clamping member are moved towards or away from the winding position along the first direction. In this way, it is possible to avoid the problem of poor synchronization when the first clamping member and the second clamping member are moved towards or away from the winding position along the first direction, so that the material strip tension adjusting mechanism can adjust the tension of the material strip more stably.

### BRIEF DESCRIPTION OF THE DRAWINGS

To better illustrate technical solutions of embodiments of the present disclosure, the accompanying drawings required for the embodiments will be briefly introduced as follows. Note that the drawings described here are only some embodiments of the present disclosure. For those skilled in the art, additional drawings can be derived based on these disclosed drawings without creative efforts.
FIG. 1 is a structural schematic diagram of a material strip tension adjusting mechanism provided by an embodiment of the present disclosure;
FIG. 2 is a left side view of the material strip tension adjusting mechanism in FIG. 1 (with the moving mechanism 1 omitted);
FIG. 3 is a rear view of the material strip tension adjusting mechanism of FIG. 2;
FIG. 4 is a structural schematic diagram of a stacking machine further provided by an embodiment of the present disclosure.

### List of main reference signs:

1-moving mechanism;
2-bracket; 21-fixed bracket; 211-first guide hole; 212-second guide hole; 2121-bushing; 22-movable bracket; 220-stop member; 221-bracket body; 222-first guidepost; 2221-post body; 2222-blocking part 2222; 223-second guidepost;
3-elastic member;
4-first clamping assembly; 41-first clamping member; 42-first driving member; 43-first adaptor; 431-first limit member; 531-second limit member;
5-second clamping assembly; 51-second clamping member; 52-second driving member; 53-second adaptor;
6-sliding rail assembly;
100-material strip tension adjusting mechanism; 200-stacking machine;
Z-material strip; LO-winding position.

### DETAILED DESCRIPTION

To facilitate a better understanding of the above objects, features and advantages of the present disclosure, specific embodiments of the present disclosure will be described in detail below with reference to the accompanying drawings. In a following description, numerous specific details are set forth in order to provide a thorough understanding of the present disclosure. However, the present disclosure can be implemented in many other ways different from those described here, and those skilled in the art can make similar improvements without violating the essence of the present disclosure. Therefore, the present disclosure is not limited by the specific embodiments disclosed below.

In the description of the present disclosure, it should be understood that, an orientation or positional relationship indicated by terms "center", "longitudinal", "lateral", "length", "width", "thickness", "upper", "lower", "front", "back", "left", "right", "vertical", "horizontal", "top", "bottom", inner", "outer", "clockwise", "counterclockwise", "axial", "radial", "circumferential" is based on orientations or positional relationships shown in the accompanying drawings, and is only for convenience of describing the present disclosure and simplifying the description, rather than indicating or implying that a device or element referred to must be provided with a particular orientation, be constructed and operate in a particular orientation, and therefore should not be understood as a limitation to the present disclosure.

In addition, terms "first" and "second" are only used for descriptive purposes and should not be understood as indicating or implying relative importance or implying a number of indicated technical features. Therefore, a feature designated as "first", "second" may expressly or implicitly include at least one of those features. In a description of the present disclosure, "a plurality" means at least two, such as two, three, etc., unless expressly and specifically defined otherwise.

In the present disclosure, unless expressly specified and limited otherwise, terms "installed", "communicated", "connected", "fixed" and other terms should be interpreted in a broad sense, for example, it can be a fixed connection, a detachable connection, or an integrated; it can be a mechanical connection or an electrical connection; it can be directly connected, or indirectly connected through an intermediate medium, and it can be an internal communication between two elements or an interaction relationship between the two elements, unless otherwise explicitly defined. For those of ordinary skill in the art, specific meanings of the above terms in the present disclosure can be understood according to specific situations.

In the present disclosure, unless expressly stated and defined otherwise, a first feature "on" or "under" a second feature may be that the first feature is in direct contact with the second feature, or the first feature and the second feature are indirectly contacted through an intermediary. In addition, the first feature being "above", "over" and "on" the second feature may mean that the first feature is directly above or obliquely above the second feature, or simply means that the first feature is on a higher horizontal level than the second feature. The first feature being "below", "under" and "beneath" the second feature may mean that the first feature is directly below or obliquely below the second feature, or simply means that the first feature is on a lower horizontal level than the second feature.

It should be noted that when an element is referred to as being "fixed to" or "arranged on" another element, it can be directly on another element, or there might be an intervening element between them. When an element is referred to as being "connected" to another element, it can be directly connected to another element or intervening elements may also be present. Terms "vertical", "horizontal", "upper", "lower", "left", "right" and similar expressions are used here only for illustration purposes rather than indicating the sole implementation.

The technical solution of the present disclosure will be further described below with reference to specific embodiments and drawings.

### First Embodiment

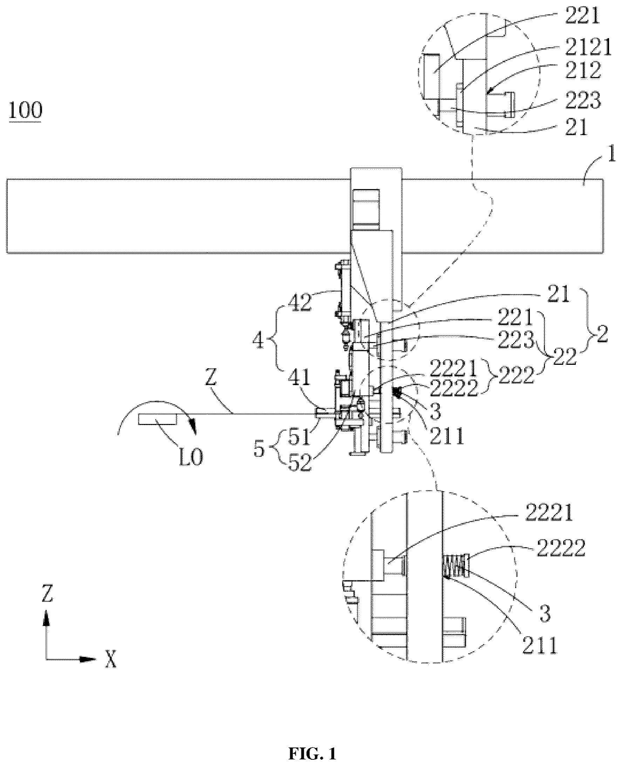

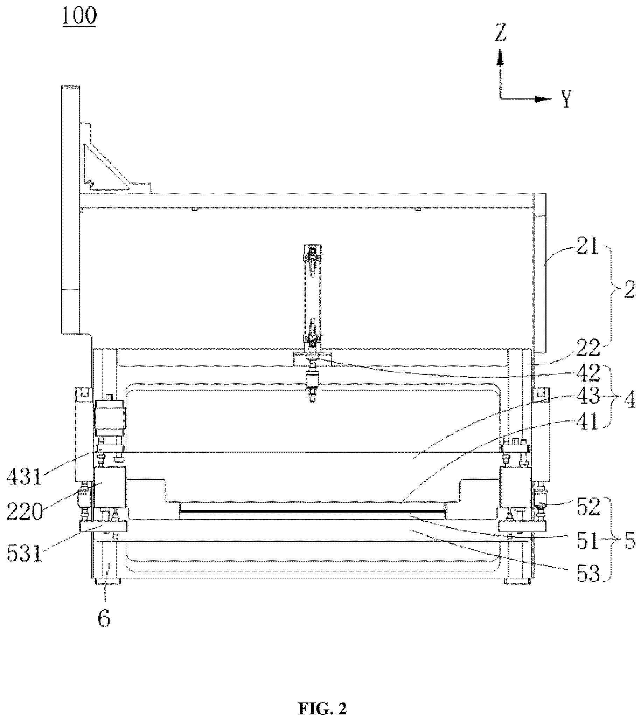

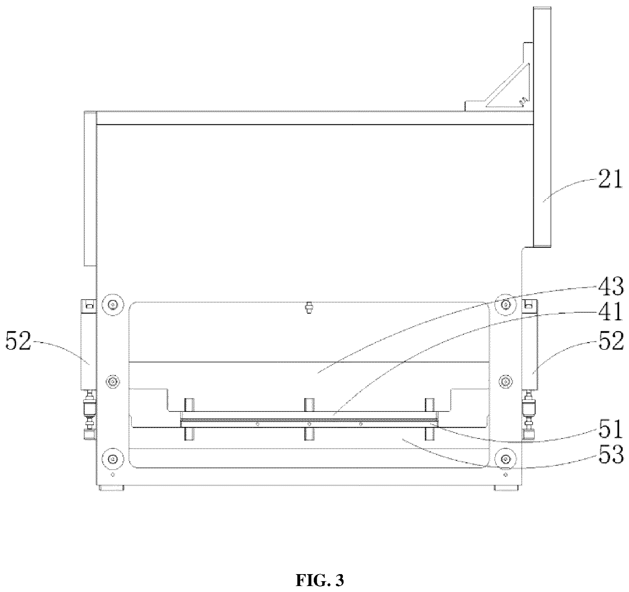

FIG. 1 is a structural schematic diagram of a material strip tension adjusting mechanism 100 provided by an embodiment of the present disclosure, FIG. 2 is a left side view of the material strip tension adjusting mechanism 100 in FIG. 1 (with the moving mechanism 1 omitted), and FIG. 3 is a rear view of the material strip tension adjusting mechanism 100 in FIG. 2.

Referring to FIGS. 1, 2 and 3, the material strip tension adjusting mechanism 100 includes: a moving mechanism 1, a bracket 2, an elastic member 3, a first clamping assembly 4 and a second clamping assembly 5. Specifically, the bracket 2 includes a fixed bracket 21 and a movable bracket 22. The fixed bracket 21 is provided on the moving mechanism 1, which is configured to drive the fixed bracket 21 to reciprocate along a first direction (the X-axis direction in FIG. 1). The movable bracket 22 is slidably provided on the fixed bracket 21 along the first direction. A first end of the elastic member 3 is connected to the fixed bracket 21, while a second end of the elastic member 3 is connected to the movable bracket 22. The first clamping assembly 4 is provided on the movable bracket 22 and includes a first clamping member 41. The second clamping assembly 5 is provided on the movable bracket 22 and includes a second clamping member 51. The second clamping member 51 is provided opposite to the first clamping member 41, and at least one of the second clamping member 51 and the first clamping member 41 can slide towards or away from the other along a second direction (the Z-axis direction in FIG. 1), so as to clamp or release the material strip Z between the first clamping member 41 and the second clamping member 51. The second direction is perpendicular to the first direction.

In the embodiment of the present disclosure, since the first clamping assembly 4 and the second clamping assembly 5 are both provided on the movable bracket 22, and the second clamping member 51 included in the second clamping assembly 5 is provided opposite to the first clamping member 41 included in the first clamping assembly 4, at least one of the second clamping member 51 and the first clamping member 41 can slide towards or away from the other along a second direction (Z-axis direction in FIG. 1). Therefore, when at least one of the second clamping member 51 and the first clamping member 41 slides towards the other along the second direction (Z-axis direction in FIG. 1), the material strip Z may be clamped between the first clamping member 41 and the second clamping member 51.

After the material strip Z is clamped between the first clamping member 41 and the second clamping member 51, since the fixed bracket 21 is provided on the moving mechanism 1, the moving mechanism 1 is configured to drive the fixed bracket 21 to reciprocate along the first direction (the X-axis direction in FIG. 1), and the movable bracket 22 is slidably provided on the fixed bracket 21 along the first direction, therefore, see FIG. 1, when the end of the material strip far away from the material strip tension adjusting mechanism 100 begins winding at the winding position LO, the moving mechanism 1 can drive the fixed bracket 21 to move towards the winding position LO along the first direction (the X-axis direction in FIG. 1), and thus through the movable bracket 22, may bring the first clamping member 41 and the second clamping member 51 to move together towards the winding position LO along the first direction (the X-axis direction in FIG. 1), so as to avoid the material strip Z clamped between the first clamping member 41 and the second clamping member 51 from being pulled apart.

Herein, since the movable bracket 22 is slidably provided on the fixed bracket 21 along the first direction, the first end of the elastic member 3 is connected to the fixed bracket 21, and the second end of the elastic member 3 is connected to the movable bracket 22, therefore, when there is a speed difference between the winding speed of the material strip and a moving speed of the moving mechanism 1 driving the fixed bracket 21, specifically, when the winding speed of the material strip is greater than the moving speed of the moving mechanism 1 driving the fixed bracket 21 towards the winding position LO along the first direction to cause the winding speed of the material strip to be greater than the moving speed of the first clamping member 41 and the second clamping member 51 towards the winding position LO along the first direction, the tension of the material strip Z will increase. After the tension of the material strip Z increases, the material strip Z will deform the elastic member 3 by the first clamping member 41 and the second clamping member 51 pulling the movable bracket 22 to slide relative to the fixed bracket 21 in the direction towards the winding position LO, the moving speed of the first clamping member 41 and the second clamping member 51 towards the winding position LO along the first direction increases. In this way, the winding speed of the material strip can be made equal to the moving speed of the first clamping member 41 and the second clamping member 51 towards the winding position LO along the first direction, and the tension of the material strip is reduced. By doing so, it is possible to avoid the material strip from being pulled apart.

When the winding speed of the material strip is smaller than the moving speed of the moving mechanism 1 driving the fixed bracket 21 towards the winding position LO along the first direction to cause the winding speed of the material strip to be smaller than the moving speed of the first clamping member 41 and the second clamping member 51 towards the winding position LO along the first direction, the tension of the material strip Z will reduce. After the tension of the material strip Z reduces, the elastic member 3 can be restored to the original state, and in the process of restoring to the original state, the elastic member 3 can enable the movable bracket 22 to move in the direction away from the winding position LO relative to the fixed bracket 21, and thus bring the first clamping member 41 and the second clamping member 51 to move in the direction away from the winding position LO relative to the fixed bracket 21, such that the moving speed of the first clamping member 41 and the second clamping member 51 towards the winding position LO along the first direction is reduced. In this way, the winding speed of the material strip can be made equal to the moving speed of the first clamping member 41 and the second clamping member 51 towards the winding position LO along the first direction, and the tension of the material strip is increased. By doing this, it is possible to avoid the material strip from getting loose or piling up.

It is worth noting that since the first clamping assembly 4 and the second clamping assembly 5 are both provided on the movable bracket 22, the movable bracket 22 is slidably provided on the fixed bracket 21 along the first direction. Therefore, by making the movable bracket 22 slide reciprocally along the first direction relative to the fixed bracket 21, the objective of bringing the first clamping member 41 and the second clamping member 42 to move synchronously towards or away from the winding position along the first direction can be realized. This ensures better synchronization when the first clamping member 41 and the second clamping member 42 are moved towards or away from the winding position LO along the first direction. In this way, it is possible to avoid the problem of poor synchronization when the first clamping member 41 and the second clamping member 42 are moved towards or away from the winding position LO along the first direction, so that the material strip tension adjusting mechanism can adjust the tension of the material strip more stably.

It should be noted that when the material strip tension adjusting mechanism 100 is applied in the stacking machine, the material strip Z may be a separator. Of course, based on different application scenarios, the material strip may also be other possible strips, and the material strip is not limited by the embodiment of the present disclosure.

Herein, the moving mechanism 1 may be a linear motor or a linear module, as long as the fixed bracket 21 can reciprocate along the first direction (X-axis direction in FIG. 1), and the moving mechanism 1 is not limited by the embodiment of the present disclosure.

Both the above first clamping member 41 and the second clamping member 51 may adopt plate-shaped structure. Of course, the first clamping member 41 and the second clamping member 51 may also be structures of other shapes, which is not limited by the embodiment of the present disclosure.

In some embodiments, referring to FIG. 1, the movable bracket 22 includes a bracket body 221 and a first guidepost 222. Both the first clamping assembly 4 and the second clamping assembly 5 are provided on the bracket body 221, and the first guidepost 222 is provided on the bracket body 221. The fixed bracket 21 is provided with a first guide hole 211, and the first guidepost 222 slidably passes through the first guide hole 211 along the first direction, so that the movable bracket 22 is slidably provided on the fixed bracket 21 along the first direction.

By enabling the first guidepost 222 to slidably pass through the first guide hole 211 along the first direction, the objective of enabling the movable bracket 22 to be slidably provided on the fixed bracket 21 along the first direction can be realized, and the implementation is very simple. Therefore, it is possible to reduce the manufacturing cost of the material strip tension adjusting mechanism to some extent.

Herein, the number of the first guidepost 222 may be one or more. Correspondingly, the number of the first guide hole 211 may be one or more, which is not limited by the embodiment of the present disclosure.

The above first guidepost 222 may be cylindrical or prismatic or the like, which is not limited by the embodiment of the present disclosure. The first guide hole 211 may be circular or rectangular or the like, as long as the shape of the first guide hole 211 matches with the first guidepost 222, and the shape of the first guide hole 211 is not limited by the embodiment of the present disclosure.

Of course, the movable bracket 22 may be slidably provided on the fixed bracket 21 along the first direction in other ways. For example, the purpose of the movable bracket 22 being slidably provided on the fixed bracket 21 along the first direction may be realized by means of the sliding rail assembly, which is not limited by the embodiment of the present disclosure.

In some embodiments, referring to FIG. 1, the first guidepost 222 includes a post body 2221 and a blocking part 2222. The post body 2221 slidably passes through the first guide hole 211 along the first direction, a first end of the post body 2221 is connected to the bracket body 221, and a second end of the post body 2221 protrudes out of the first guide hole 211. The blocking part 2222 is provided on the second end of the post body 2221, and the blocking part 2222 is configured to prevent the second end of the post body 2221 from sliding into the first guide hole 211. The elastic member 3 is clamped between the blocking part 2222 and the fixed bracket 21, the first end of the elastic member 3 abuts against the fixed bracket 21, and the second end of the elastic member 3 abuts against the blocking part 2222.

Since the first end of the elastic member 3 abuts against the fixed bracket 21, the second end of the elastic member 3 abuts against the blocking part 2222. Therefore, when the winding speed of the material strip is greater than the moving speed of the moving mechanism 1 driving the fixed bracket 21 towards the winding position LO along the first direction to cause the tension of the material strip to increase, the first clamping member 41 and the second clamping member 51 may be configured to bring the bracket body 221 to slide relative to the fixed bracket 21 towards the winding position LO along the first direction, such that the elastic member 3 is compressed, and thus the moving speed of the first clamping member 41 and the second clamping member 51 towards the winding position LO along the first direction increases. In this way, the winding speed of the material strip can be made equal to the moving speed of the first clamping member 41 and the second clamping member 51 towards the winding position LO along the first direction, and the tension of the material strip is reduced. By doing so, it is possible to avoid the material strip from being pulled apart.

When the winding speed of the material strip is smaller than the moving speed of the moving mechanism 1 driving the fixed bracket 21 towards the winding position LO along the first direction to cause the tension of the material strip to reduce, the elastic member 3 can be restored to the original state. The elastic member 3 in the process of restoring to the original state may push the bracket body 221 relative to the fixed bracket 21 in the direction away from the winding position LO along the first direction, such that the moving speed of the first clamping member 41 and the second clamping member 51 towards the winding position LO along the first direction reduces. In this way, the winding speed of the material strip can be made equal to the moving speed of the first clamping member 41 and the second clamping member 51 towards the winding position LO along the first direction, and the tension of the material strip is increased. By doing this, it is possible to avoid the material strip from getting loose or piling up.

In some embodiments, referring to FIG. 1, the elastic member 3 is a spring which is sleeved on the post body 2221. By sleeving the spring on the post body 2221, the post body 2221 may function to guide the spring, hereby preventing the spring from tilting.

Certainly, the elastic member 3 may also be other possible elastic components, which is not limited by the embodiments of the present disclosure. For example, the elastic member 3 may also be a spring plate or the like, which is not limited by the embodiments of the present disclosure.

In some embodiments, referring to FIG. 1, the movable bracket 22 further includes: one or more second guideposts 223, wherein each of the second guideposts 223 is provided on the bracket body 221. The fixed bracket 21 is provided with a second guide hole 212 corresponding one-to-one with the one or more second guideposts 223. The second guide hole 212 is provided with a bushing 2121 therein, and the second guidepost 223 slidably passes through a corresponding bushing 2121 along the first direction.

By enabling the second guidepost 223 to slidably pass through a corresponding bushing 2121 along the first direction, under the cooperation of the second guidepost 223 and the bushing 2121, the movable bracket 22 can slide more stably relative to the fixed bracket 21 along the first direction.

Herein, the number of the above second guideposts 223 may be 2, 3, or 4, etc., which is not limited by the embodiment of the present disclosure. Correspondingly, the number of bushings 2121 may also be 2, 3, or 4, etc.

In some embodiments, referring to FIG. 3, the second clamping assembly 5 further includes a second driving member 52, which is configured to drive the second clamping member 51 to slide towards or away from the first clamping member 41 along the second direction.

When the second clamping assembly 5 further includes the second driving member 52, by the second driving member 52 driving the second clamping member 51 to slide towards or away from the first clamping member 41 along the second direction, it is possible to enable the second clamping member 51 and the first clamping member 41 to move in the direction close or away from each other, such that the objective of clamping the material strip Z between the second clamping member 51 and the first clamping member 41 can be realized, the implementation of which is very simple and can simplify the structure of the whole material strip tension adjusting mechanism.

It should be noted that, referring to FIG. 3, the number of the second driving members 52 may be one, two or three (the number of the second driving members 52 in FIG. 3 is two), which is not limited by the embodiment of the present disclosure.

When the number of the second driving members 52 is two, the second clamping member 51 may be driven by the second driving member 52 to slide more stably towards or away from the first clamping member 41 along the second direction.

The above second driving member 52 may be an air cylinder or an electric cylinder, which is not limited by the embodiment of the present disclosure.

In some embodiments, referring to FIG. 1, the first clamping assembly 4 further includes a first driving member 42, which is configured to drive the first clamping member 41 to slide towards or away from the second clamping member 51 along the second direction.

When the first clamping assembly 4 further includes a first driving member 42, by driving the first clamping member 41 via the first driving member 42 to slide towards or away from the second clamping member 51 along the second direction, it is possible to move the second clamping member 51 and the first clamping member 41 towards or away from each other, so that the material strip Z can be better clamped between the second clamping member 51 and the first clamping member 41.

Herein, the structure of the first driving member 42 may be the same or similar to the structure of the second driving member 52, which will not be repeated herein by the embodiment of the present disclosure.

In order to enable the first clamping member 41 and the second clamping member 51 to move more stably along the second direction, in some embodiments, referring to FIG. 2, the material strip tension adjusting mechanism further includes a sliding rail assembly 6, via which both the first clamping member 41 and the second clamping member 51 are slidably provided on the movable bracket 22 along the second direction.

Since the first clamping member 41 and the second clamping member 51 are both slidably provided on the movable bracket 22 via the sliding rail assembly 6 along the second direction such that the sliding rail assembly 6 may function to guide the first clamping member 41 and the second clamping member 51, by doing this, it is possible for the first clamping member 41 and the second clamping member 51 to move more stably along the second direction.

Herein, the above sliding rail assembly 6 may include a guide rail and two sliders. The guide rail may be provided on the movable bracket 22 and extend along the second direction. The two sliders can be slidably provided on the guide rail along the extending direction of the guide rail. The first clamping member 41 and the second clamping member 51 are respectively provided on the two sliders. In this way, the objective of enabling the first clamping member 41 and the second clamping member 51 to move more stably along the second direction can be realized.

In some embodiments, referring to FIG. 2, the first clamping assembly 4 further includes a first adaptor 43, and the second clamping assembly 5 further includes a second adaptor 53. Both the first adaptor 43 and the second adaptor 53 are provided on the sliding rail assembly 6, the first clamping member 41 is connected to the first adaptor 43, and the second clamping member 51 is connected to the second adaptor 53. The first driving member 42 is connected to the first adaptor 43 for driving the first adaptor 43 to slide along the second direction. The second driving member 52 is connected to the second adaptor 53 for driving the second adaptor 53 to slide along the second direction.

Since the first adaptor 43 and the second adaptor 53 are both provided on the sliding rail assembly 6, the first clamping member 41 is connected to the first adaptor 43, the second clamping member 51 is connected to the second adaptor 53, the first driving member 42 is connected to the first adaptor 43, and the second driving member 52 is connected to the second adaptor 53, when the first driving member 42 drives the first adaptor 43 to slide along the second direction, the first clamping member 41 can be synchronously driven to slide along the second direction; when the second driving member 52 drives the second adaptor 53 to slide along the second direction, the second clamping member 51 can be synchronously driven to slide along the second direction.

By providing the first adaptor 43, the situation that the first driving member 42 is directly connected to the first clamping member 41 can be avoided, and thus the structure of the first clamping member 41 can be simplified. In the same way, by providing the second adaptor 53, the situation that the second driving member 52 is directly connected to the second clamping member 51 can be avoided, and thus the structure of the second clamping member 51 can be simplified.

Herein, both the above first adaptor 43 and second adaptor 53 may adopt plate-shaped structure, which is not limited by the embodiment of the present disclosure.

In order to prevent the material strip clamped between the first clamping member 41 and the second clamping member 51 from being damaged due to an excessive clamping force between the first clamping member 41 and the second clamping member 51, in some embodiments, referring to FIG. 2, the first adaptor 43 is provided with a first limit member 431, and the second adaptor 53 is provided with a second limit member 531. The first limit member 431 and the second limit member 531 are arranged opposite to each other along the second direction (Z-axis direction in FIG. 2). The movable bracket 22 is provided with a stop member 220 located between the first limit member 431 and the second limit member 531. When the first adaptor 43 slides along the second direction such that the first limit member 431 abuts against the stop member 220, and the second adaptor 53 slides along the second direction such that the second limit member 531 abuts against the stop member 220, the first clamping member 41 and the second clamping member 51 abut against each other.

By enabling the first adaptor 43 to slide along the second direction such that the first limit member 431 abuts against the stop member 220 and enabling the second adaptor 53 to slide along the second direction such that the second limit member 531 abuts against the stop member 220, the first clamping member 41 and the second clamping member 51 abut against each other, and the stop member 220 functions as a limiter, preventing damage to the material strip clamped between the first clamping member 41 and the second clamping member 51 due to excessive clamping force between the two clamping members.

Herein, the above stop member 220 may be a stop block, and the above first limit member 431 and the second limit member 531 may be elastic limiters. When the first limit member 431 and the second limit member 531 are elastic limiters, the collision noise generated when the second limit member 531 abuts against the stop member 220 can be reduced, and the collision noise generated when the first limit member 431 abuts against the stop member 220 can also be reduced.

In some embodiments, the first clamping member 41 and/or the second clamping member 51 is provided with an adsorption hole. By providing the adsorption hole on the first clamping member 41 and/or the second clamping member 51, it is also possible to adsorb and fix the material strip through the adsorption hole, and thus to prevent the material strip from wobbling.

### Second Embodiment

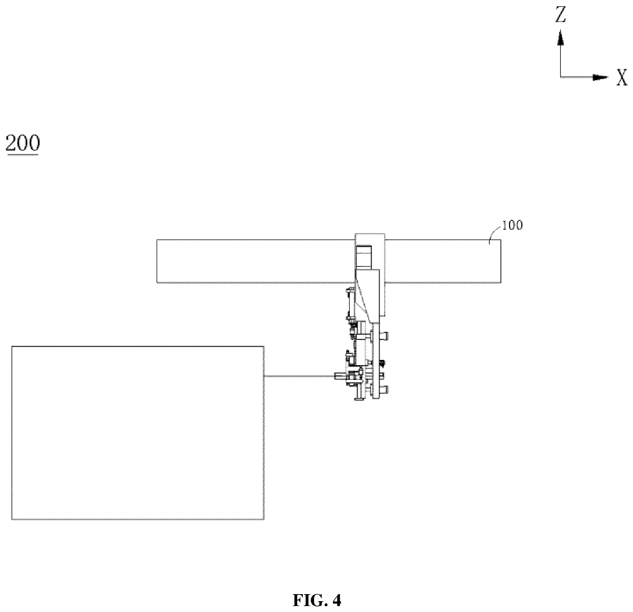

FIG. 4 is a structural schematic diagram of a stacking machine 200 further provided by an embodiment of the present disclosure. Referring to FIG. 4, the stacking machine 200 includes the material strip tension adjusting mechanism 100.

Herein, the structure of the material strip tension adjusting mechanism 100 may be the same as that of any one of the material strip tension adjusting mechanisms 100 in the first embodiment, and can bring about the same or similar beneficial effects, which may specifically refer to the description of the material strip tension adjusting mechanism 100 in the first embodiment above, and will not be repeated in the embodiment of the present disclosure.

In the embodiment of the present disclosure, since the material strip tension adjusting mechanism 100 may avoid the problem of poor synchronization when the first clamping member 41 and the second clamping member 51 are moved towards or away from the winding position LO along the first direction such that the material strip tension adjusting mechanism can adjust the tension of the material strip more stably, when the stacking machine includes the material strip tension adjusting mechanism 100, the performance of the stacking machine can be made better.

The technical features of the above embodiments can be combined arbitrarily. For the sake of brevity, not all possible combinations of the technical features in the above embodiments are described. However, as long as there is no contradiction in the combination of these technical features, it should be considered as a scope of this description.

The above embodiments represent only a few embodiments of the present application, and are described in detail for clarity. However, this detailed description should not be interpreted as limiting the scope of the present application. It is important to note that those skilled in the art may make various modifications and improvements without departing from the core concept of the present application, and such modifications and improvements fall within the protective scope of the present application. Therefore, the protective scope of the present application shall be subject to the appended claims.

## Claims

1. A material strip tension adjusting mechanism, **characterized by** comprising:
a moving mechanism (1);
a bracket (2), comprising a fixed bracket (21) and a movable bracket (22), the fixed bracket (21) being provided on the moving mechanism (1), the moving mechanism (1) being configured to drive the fixed bracket (21) to reciprocate along a first direction, and the movable bracket (22) being slidably provided on the fixed bracket (21) along the first direction;
an elastic member (3), a first end of the elastic member (3) being connected to the fixed bracket (21), and a second end of the elastic member (3) being connected to the movable bracket (22);
a first clamping assembly (4), provided on the movable bracket (22), comprising a first clamping member (41);
a second clamping assembly (5), provided on the movable bracket (22), comprising a second clamping member (51) opposed to the first clamping member (41), at least one of the first clamping member (41) and the second clamping member (51) being slidable towards or away from the other along a second direction, so as to clamp or release the material strip between the first clamping member (41) and the second clamping member (51), the second direction being perpendicular to the first direction.

2. The material strip tension adjusting mechanism according to claim 1, **characterized in that** the movable bracket (22) comprises a bracket body (221) and a first guidepost (222), both the first clamping assembly (4) and the second clamping assembly (5) are provided on the bracket body (221), the first guidepost (222) is provided on the bracket body (221), the fixed bracket (21) is provided with a first guide hole (211), and the first guidepost (222) slidably passes through the first guide hole (211) along the first direction, so that the movable bracket (22) is slidably provided on the fixed bracket (21) along the first direction.

3. The material strip tension adjusting mechanism according to claim 2, **characterized in that** the first guidepost (222) comprises a post body (2221) and a blocking part (2222), the post body (2221) slidably passes through the first guide hole (211) along the first direction, a first end of the post body (2221) is connected to the bracket body (221), a second end of the post body (2221) protrudes out of the first guide hole (211), the blocking part (2222) is provided on the second end of the post body (2221), and the blocking part (2222) is configured to prevent the second end of the post body (2221) from sliding into the first guide hole (211).

4. The material strip tension adjusting mechanism according to claim 3, **characterized in that** the elastic member (3) is clamped between the blocking part (2222) and the fixed bracket (21), the first end of the elastic member (3) abuts against the fixed bracket (21), and the second end of the elastic member (3) abuts against the blocking part (2222).

5. The material strip tension adjusting mechanism according to claim 4, **characterized in that** the elastic member (3) is a spring which is sleeved on the post body (2221).

6. The material strip tension adjusting mechanism according to claim 2, **characterized in that** the movable bracket (22) further comprises:
one or more second guideposts (223), wherein each of the second guideposts (223) is provided on the bracket body (221), the fixed bracket (21) is provided with a second guide hole (212) corresponding one-to-one with the one or more second guideposts (223), the second guide hole (212) is provided with a bushing (2121) therein, and the second guidepost (223) slidably passes through a corresponding bushing (2121) along the first direction.

7. The material strip tension adjusting mechanism according to any one of claims 1 to 6, **characterized in that**:
the first clamping assembly (4) further comprises: a first driving member (42), configured to drive the first clamping member (41) to slide towards or away from the second clamping member (51) along the second direction.

8. The material strip tension adjusting mechanism according to any one of claims 1 to 6, **characterized in that**:
the second clamping assembly (5) further comprises a second driving member (52), configured to drive the second clamping member (51) to slide towards or away from the first clamping member (41) along the second direction.

9. The material strip tension adjusting mechanism according to any one of claims 1 to 6, **characterized in that**:
the first clamping assembly (4) further comprises: a first driving member (42), configured to drive the first clamping member (41) to slide towards or away from the second clamping member (51) along the second direction; the second clamping assembly (5) further comprises a second driving member (52), which is configured to drive the second clamping member (51) to slide towards or away from the first clamping member (41) along the second direction.

10. The material strip tension adjusting mechanism according to claim 9, **characterized in that** the material strip tension adjusting mechanism further comprises:
a sliding rail assembly (6), via which both the first clamping member (41) and the second clamping member (51) are slidably provided on the movable bracket (22) along the second direction.

11. The material strip tension adjusting mechanism according to claim 10, **characterized in that** the first clamping assembly (4) further comprises a first adaptor (43) provided on the sliding rail assembly (6), the first clamping member (41) is connected to the first adaptor (43), and the first driving member (42) is connected to the first adaptor (43) for driving the first adaptor (43) to slide along the second direction.

12. The material strip tension adjusting mechanism according to claim 11, **characterized in that** the second clamping assembly (5) further comprises a second adaptor (53) provided on the sliding rail assembly (6), the second clamping member (51) is connected to the second adaptor (53), and the second driving member (52) is connected to the second adaptor (53) for driving the second adaptor (53) to slide along the second direction.

13. The material strip tension adjusting mechanism according to claim 12, **characterized in that** the first adaptor (43) is provided with a first limit member (431), the second adaptor (53) is provided with a second limit member (531), the first limit member (431) and the second limit member (531) are arranged opposite to each other along the second direction, the movable bracket (22) is provided with a stop member (220) located between the first limit member (431) and the second limit member (531), and when the first adaptor (43) slides along the second direction such that the first limit member (431) abuts against the stop member (220), and the second adaptor (53) slides along the second direction such that the second limit member (531) abuts against the stop member (220), the first clamping member (41) and the second clamping member (51) abut against each other.

14. The material strip tension adjusting mechanism according to any one of claims 1 to 6, **characterized in that** the first clamping member (41) and/or the second clamping member (51) is provided with an adsorption hole.

15. A stacking machine, **characterized in that** the stacking machine comprises the material strip tension adjusting mechanism according to any one of claims 1 to 14.
